# EUROPÄISCHE PATENTANMELDUNG

(11) **EP 2 037 409 A1**
(43) Veröffentlichungstag der Anmeldung: **18.03.2009**
(21) Anmeldenummer: 07017986.6
(22) Anmeldetag: 13.09.2007
(51) Int. Cl.: G06T 7/20

(54) **Verfahren zur Hinderniserfassung**

(71) Anmelder: Delphi Technologies, Inc., Troy, Michigan 48007 (US)
(72) Erfinder: Ma, Guanglin, 42349 Wuppertal (DE); Park, Su-Birm, 52457 Aldenhoven (DE); Ioffe, Alexander, 53229 Bonn (DE)
(74) Vertreter: Manitz, Finsterwald & Partner GbR

(57) **Zusammenfassung**

Es wird ein Verfahren zur Detektion eines auf einer Fahrbahn befindlichen Hindernisses, insbesondere Fußgängers, in der Umgebung im Sichtbereich eines an einen beweglichen Träger wie insbesondere einem Fahrzeug angebrachten optischen Sensors angegeben, bei dem mittels des optischen Sensors zu einem ersten Zeitpunkt ein erstes Bild und zu einem späteren zweiten Zeitpunkt ein zweites Bild aufgenommen werden, durch eine Transformation des ersten aufgenommenen Bildes aus der Bildebene des optischen Sensors in die Fahrbahnebene ein erstes transformiertes Bild erzeugt wird, aus dem ersten transformierten Bild unter Berücksichtigung der Trägerbewegung in der Zeitspanne zwischen dem ersten Zeitpunkt und dem zweiten Zeitpunkt ein weiteres transformiertes Bild erzeugt wird, das weitere transformierte Bild aus der Fahrbahnebene in die Bildebene rücktransformiert wird und auf der Basis des in die Bildebene rücktransformierten Bildes und des zweiten aufgenommenen Bildes eine Bildstabilisierung durchgeführt wird.

## Beschreibung

Die Erfindung betrifft ein Verfahren zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors.

Mit derartigen Verfahren soll insbesondere das Risiko von Kollisionen mit Fußgängern im Straßenverkehr reduziert werden.

Der Einsatz von Kameras in Fahrzeugen zur entsprechenden Überwachung der Umgebung ist bereits bekannt. Als problematisch erweist sich hierbei jedoch die Menge der zu verarbeitenden Bilddaten sowie die automatische Auswertung der erzeugten Bilder. So sind die aufgenommenen Bilder in der Regel mit einem Rauschen behaftet, das insbesondere durch die Eigenbewegung des Fahrzeugs und eventuelle Fahrbahnunebenheiten, eine Fahrzeugneigung, Fahrzeugvibrationen und/ oder dergleichen verursacht sein kann. Die entsprechend aufwändige Bildbearbeitung bringt insbesondere dort Probleme mit sich, wo die Auswertung des Bildmaterials nicht nur automatisch, sondern auch noch besonders schnell erfolgen muss, wie es beispielsweise in einem Fahrzeugsicherheitssystem zum Schutz von Personen bei einer Kollision erforderlich ist.

Der Erfindung liegt die Aufgabe zugrunde, eine Möglichkeit anzugeben, den Rechenaufwand bei der Detektion von auf einer Fahrbahn befindlichen Hindernissen wie insbesondere Fußgängern zu reduzieren und/oder die Robustheit einer derartigen Detektion zu erhöhen.

Gemäß der Erfindung wird diese Aufgabe gelöst durch ein Verfahren zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, bei dem mittels des optischen Sensors zu einem ersten Zeitpunkt ein erstes Bild und zu einem späteren zweiten Zeitpunkt ein zweites Bild aufgenommen werden, durch eine Transformation des ersten aufgenommenen Bildes aus der Bildebene des optischen Sensors in die Fahrbahnebene ein erstes transformiertes Bild erzeugt wird, aus dem ersten transformierten Bild unter Berücksichtigung der Trägerbewegung in der Zeitspanne zwischen dem ersten Zeitpunkt und dem zweiten Zeitpunkt ein weiteres transformiertes Bild erzeugt wird, das weitere transformierte Bild aus der Fahrbahnebene in die Bildebene rücktransformiert wird und auf der Basis des in die Bildebene rücktransformierten Bildes und des zweiten aufgenommenen Bildes eine Bildstabilisierung durchgeführt wird.

Im Gegensatz zu der bisher üblichen Praxis, gemäß der der Bildstabilisierungsalgorithmus auf zwei aufeinander folgende aufgenommene Originalbilder angewandt wird, erfolgt erfindungsgemäß die Bildstabilisierung auf der Basis eines aus der Fahrbahnebene in die Bildebene rücktransformierten Bildes und einem zu einem späteren Zeitpunkt aufgenommenen Bildes, wobei die Träger- bzw. Fahrzeugbewegung bereits bei der Erzeugung des rücktransformierten Bildes berücksichtigt wurde. Mit dem Bildstabilisierungsalgorithmus muss also lediglich noch eine Rauschbewegung kompensiert werden, die durch eventuelle Fahrbahnunebenheiten, eine Trägerneigung, Trägervibrationen und/oder dergleichen bedingt sind.

Bevorzugt wird das erste transformierte Bild zur Erzeugung des weiteren transformierten Bildes unter Berücksichtigung der Trägerbewegung, insbesondere Trägergeschwindigkeit und/oder Trägergiergeschwindigkeit, in den späteren zweiten Zeitpunkt transformiert.

Von Vorteil ist insbesondere auch, wenn die Trägerbewegung, insbesondere Trägergeschwindigkeit und/oder Trägergiergeschwindigkeit, bei der Erzeugung des weiteren transformierten Bildes durch eine entsprechende Translation und/oder Rotation des ersten transformierten Bildes berücksichtigt wird.

Wie bereits erwähnt, können mit der Bildstabilisierung insbesondere durch eventuelle Fahrbahnunebenheiten, eine Trägerneigung, Trägervibrationen und/oder dergleichen bedingte Störungen kompensiert werden.

Bei der Bildstabilisierung wird zweckmäßigerweise aus dem rücktransformierten Bild und dem zweiten aufgenommenen Bild jeweils ein Kantenbild erzeugt.

Dabei kann aus den für das rücktransformierte Bild und das zweite aufgenommene Bild erhaltenen Kantenbildern ein Bewegungsvektor berechnet und dieser Bewegungsvektor zur Störungskompensation herangezogen werden. Hierbei kann der Bewegungsvektor beispielsweise durch eine Kalmann-Filterung korrigiert und der entsprechend korrigierte Bewegungsvektor zur Störungskompensation mit herangezogen werden.

Als optischer Sensor wird bevorzugt eine Kamera, insbesondere Videokamera, verwendet.

Bevorzugt wird als optischer Sensor eine Monokamera eingesetzt.

Gegenstand der Erfindung ist zudem ein Computerprogramm mit Programmcode-Mitteln, um das vorstehend beschriebene Verfahren durchzuführen, wenn das Programm auf einem Computer oder einer entsprechenden Recheneinheit durchgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer ist hierbei eine beliebige Datenverarbeitungsvorrichtung zu verstehen, mit der das Verfahren ausgeführt werden kann. Dabei kann eine solche Datenverarbeitungsvorrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, mit einer Datenverarbeitungsanlage, die zur Durchführung des vorstehend beschriebenen Verfahrens ausgebildet ist.

Die Erfindung wird im Folgenden anhand von Ausführungsbeispielen unter Bezugnahme auf die Zeichnung näher beschrieben; in dieser zeigen:
- Fig. 1: die Transformation eines aufgenommenen Bildes aus der Bildebene in die Fahrbahnebene,
- Fig. 2: eine Hintergrundsubtraktion in der Fahrbahnebene,
- Fig. 3: eine Rücktransformation des durch die Hintergrund- subtraktion in der Fahrbahnebene erhaltenen Ergeb- nisses von der Fahrbahnebene in die Bildebene,
- Fig. 4: ein vereinfachtes, die Transformation in die Fahrbahn- ebene, eine in der Fahrbahnebene erfolgende Trans- formation und die Rücktransformation in die Bildebe- ne umfassendes Ablaufschema,
- Fig. 5: ein vereinfachtes Ablaufschema der Hindernisdetektion einschließlich Bildstabilisierung und
- Fig. 6: eine schematische Darstellung eines beispielhaften Bildstabilisierungsprozesses.

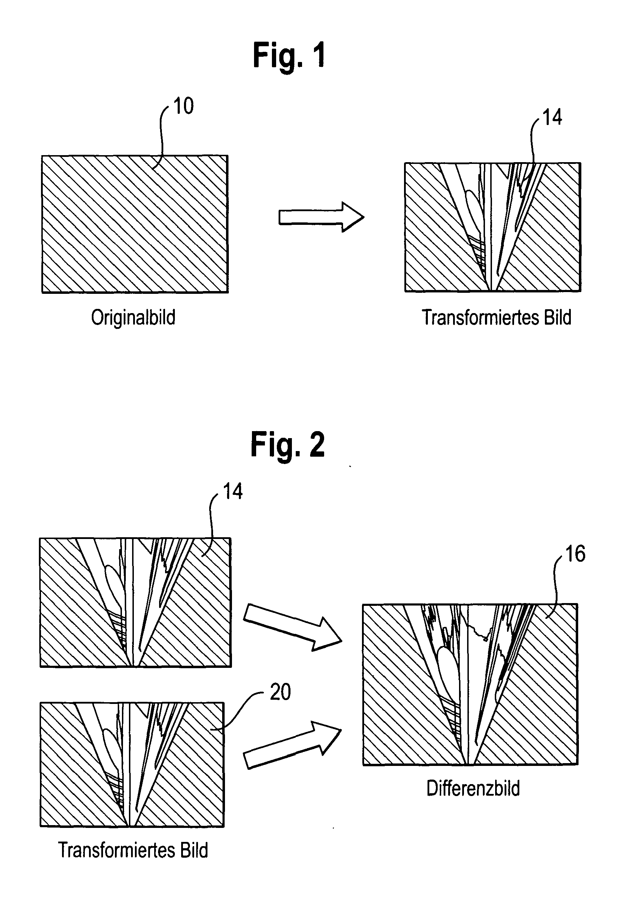

Die Fig. 1 bis 6 zeigen eine beispielhafte Ausgestaltung eines Verfahrens zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors.

Dabei werden mittels des optischen Sensors zu einem ersten Zeitpunkt T-1 ein erstes Bild 10 und zu einem Zeitpunkt T ein zweites Bild 12 aufgenommen. Bei diesen aufgenommenen Bildern handelt es sich also um Originalbilder. Durch eine Transformation des ersten aufgenommenen Bildes 10 aus der Bildebene des optischen Sensors in die Fahrbahnebene wird ein erstes transformiertes Bild 14 erzeugt. Aus dem ersten transformierten Bild 14 wird unter Berücksichtigung der Trägerbewegung in der Zeitspanne zwischen dem ersten Zeitpunkt T-1 und dem zweiten Zeitpunkt T ein weiteres transformiertes Bild 16 erzeugt. Das weitere transformierte Bild 16 wird aus der Fahrbahnebene in die Bildebene rücktransformiert. Auf der Basis des in die Bildebene rücktransformierten Bildes 18 und des zweiten aufgenommenen Bildes 12 wird dann eine Bildstabilisierung durchgeführt.

Wie bereits erwähnt, kann es sich bei dem beweglichen Träger insbesondere um ein Fahrzeug handeln. Das Verfahren kann dann insbesondere der Detektion von Fußgängern dienen. Als optischer Sensor kann beispielsweise eine Kamera, insbesondere Videokamera verwendet werden, wobei bevorzugt eine Monokamera eingesetzt wird.

Fig. 1 zeigt die Transformation des ersten aufgenommenen Bildes 10 aus der Bildebene des optischen Sensors in die Fahrbahnebene, wodurch das erste transformierte Bild 14 erzeugt wird.

Allgemein gilt, dass die Pixel in der zweidimensionalen Bildebene des optischen Sensors bzw. Kamera Lichtsignale aus einer dreidimensionalen Umgebung empfangen, sodass die einem jeweiligen Pixel entsprechende exakte dreidimensionale Position nicht ohne zusätzliche Bedingungen bestimmt werden kann. Für den an einem Fahrzeug montierten optischen Sensor entsprechen die pixelweise empfangenen Lichtsignale der Fahrbahn oder Hindernissen, wobei ein jeweiliges Objekt als Hindernis erkannt werden muss, wenn dessen vertikale Koordinate (Höhe) sich von der vertikalen Koordinate der Fahrbahn unterscheidet.

In dem zur vorliegenden Hindernisdetektion herangezogenen Algorithmus wird unterstellt, dass die Fahrbahnebene idealerweise vollständig eben und horizontal ist. Basierend auf dieser Annahme wird die Bildebene in eine Draufsicht der Fahrbahnebene transformiert, wodurch eine Art Landkarte erstellt wird.

Fig. 2 zeigt eine beispielhafte Hintergrundsubtraktion in der Fahrbahnebene. Danach kann beispielsweise für zwei aufeinanderfolgende landkartenartige transformierte Bilder unter Verwendung der Träger- bzw. Fahrzeugbewegung der Überlappungsbereich für diese beiden Bilder berechnet und für den Überlappungsbereich eine Hintergrundsubtraktion durchgeführt werden, wodurch ein Differenzbild erhalten wird.

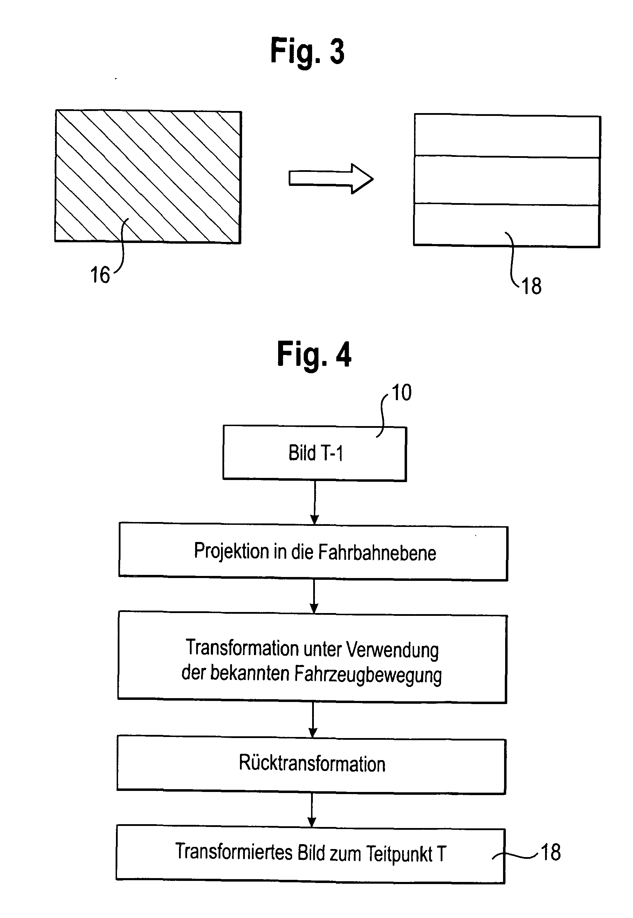

Das Ergebnis der Subtraktion kann durch Vergleich mit einem Schwellenwert in eine binäre Form gebracht werden. Das in eine binäre Form gebrachte Ergebnis entspricht erfassten Hindernissen in der Fahrbahnebene. Das Ergebnis dieser Hinderniserfassung wird von der Fahrbahnebene in die Bildebene rücktransformiert, um die entsprechenden Hindernisse in der Bildebene aufzufinden, wie dies in der Fig. 3 gezeigt ist. In dieser Fig. 3 ist die Rücktransformation des durch die Hintergrundsubtraktion in der Fahrbahnebene erhaltenen Ergebnisses von der Fahrbahnebene in die Bildebene dargestellt.

Bei dem in der Fig. 2 erkennbaren Differenzbild kann es sich insbesondere um das weitere transformierte Bild 16 handeln. Dabei ist insbesondere eine solche Ausgestaltung des Verfahrens denkbar, bei der das erste transformierte Bild 14 zur Erzeugung dieses weiteren transformierten Bildes 16 unter Berücksichtigung der Trägerbewegung, insbesondere Trägergeschwindigkeit und/oder Trägergiergeschwindigkeit, in den späteren zweiten Zeitpunkt T transformiert wird. Aus dem ersten transformierten Bild 14 und dem aus der Transformation in den späteren zweiten Zeitpunkt T erhaltenen transformierten Bild 20 kann dann beispielsweise durch ein entsprechendes Differenzbild das weitere transformierte Bild 16 erzeugt werden.

Die Trägerbewegung, insbesondere Trägergeschwindigkeit und/oder Trägergiergeschwindigkeit, kann durch eine entsprechende Translation und/oder Rotation des ersten transformierten Bildes 14 berücksichtigt werden.

Da die anhand der Fig. 1 bis 3 beschriebene anfängliche Detektion auf der Annahme basiert, dass die Fahrbahnebene idealerweise vollständig eben und horizontal ist und die Fahrbahnebene tatsächlich jedoch Unebenheiten aufweisen kann, ist das Detektionsergebnis mit einem Rauschen behaftet. Die Unebenheiten der Fahrbahnebene können auch Neigungsbewegungen des Fahrzeuges, das hier den Träger bildet, hervorrufen, was ebenfalls eine rauschbehaftete Detektion bewirkt.

Zur Kompensation dieser durch die Neigungsbewegungen des Fahrzeugs hervorgerufenen Probleme einer mit Rauschen behafteten Detektion kann nun in der zweidimensionalen Bildebene eine entsprechende Bildstabilisierung erfolgen. Dabei kann allgemein beispielsweise ein vorangehendes Bild durch Vergleich mit einem nachfolgenden Bild entsprechend stabilisiert werden.

Eine solche Bildstabilisierung erfolgt erfindungsgemäß auf der Basis des in die Bildebene rücktransformierten Bildes 18 und des zweiten aufgenommenen Bildes 12.

Fig. 4 zeigt ein vereinfachtes, die Transformation in die Fahrbahnebene, die in der Fahrbahnebene erfolgende Transformation und die Rücktransformation in die Bildebene umfassendes Ablaufschema. Danach wird das zum ersten Zeitpunkt T-1 aufgenommene Bild 10 in die Fahrbahnebene projiziert, das erhaltene erste transformierte Bild 14 unter Berücksichtigung der Fahrzeugbewegung, insbesondere Fahrzeuggeschwindigkeit und/oder Fahrzeuggiergeschwindigkeit, in den späteren zweiten Zeitpunkt T transformiert und das gegebenenfalls nach einer Subtraktion erhaltene weitere transformierte Bild 16 in die Bildebene rücktransformiert. In dieser Bildebene liegt nun also ein vom Zeitpunkt T-1 in den Zeitpunkt T transformiertes Bild vor.

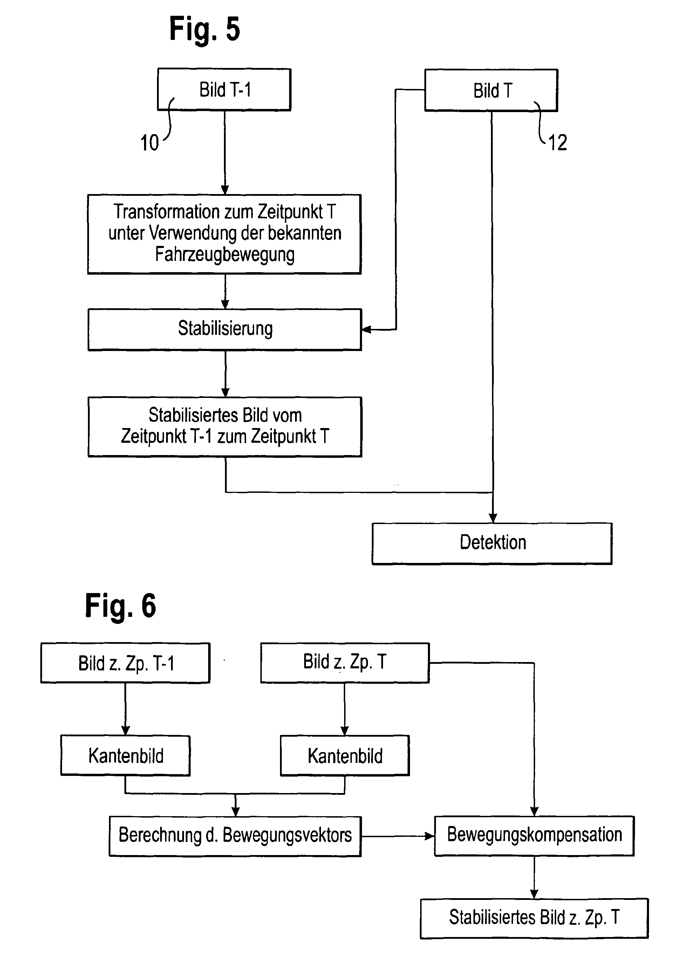

Fig. 5 zeigt ein vereinfachtes Ablaufschema der Hindernisdetektion einschließlich Bildstabilisierung.

Danach wird das zum ersten Zeitpunkt T-1 aufgenommene erste Bild 10 in die Fahrbahnebene projiziert. In der Fahrbahnebene wird dann das erhaltene erste transformierte Bild für den Zeitpunkt T-1 unter Berücksichtigung der bekannten Fahrzeugbewegung (Geschwindigkeit und Gierrate) in den späteren zweiten Zeitpunkt T transformiert. Schließlich wird das erhaltene weitere transformierte Bild 16 aus der Fahrbahnebene in die Bildebene des optischen Sensors rücktransformiert. Als Ergebnis erhält man das entsprechende Bild der Aufnahme zum Zeitpunkt T-1 für die Zeit T (vgl. auch nochmals Fig. 8). Schließlich erfolgt die Bildstabilisierung auf der Basis des in die Bildebene rücktransformierten Bildes 18 und des zum späteren zweiten Zeitpunkt T aufgenommenen zweiten Bildes 12. Auf diese Weise wird zunächst die bekannte Fahrzeugbewegung kompensiert, während die danach erfolgende Bildstabilisierung nur noch zur Kompensation von Bewegungsrauschen erfolgt, das durch die Fahrzeugneigung, eventuelle Fahrbahnunebenheiten usw. verursacht ist.

Fig. 6 zeigt in schematischer Darstellung einen beispielhaften Bildstabilisierungsprozess.

Danach können zwei aufeinander folgende Bilder mittels einer entsprechenden Filterung in binäre Bilder transferiert werden, um Kanteninformationen sowie einen wesentlichen Mittenfrequenzgehalt in den vergleichsweise deutlicheren Teilen des Bildes zu erhalten.

Im nächsten Schritt wird ein Bewegungsvektor berechnet, indem nicht übereinstimmende Stellen von zwei aufeinander folgenden binären oder Kantenbildern gemessen werden. Der Bewegungsvektor kann durch eine Kalmann-Filterung korrigiert werden, woraufhin das Bild unter Verwendung des korrigierten Bewegungsvektors kompensiert werden kann.

Eine solche Vorgehensweise funktioniert insbesondere dann, wenn der optische Sensor, zum Beispiel Camcorder, in einer festgelegten Position vibriert. Im vorliegenden Fall kann der optische Sensor bzw. die Kamera an einem sich bewegenden Fahrzeug angebracht sein. Hierbei ist die Differenz der beiden aufeinander folgenden Bilder nicht nur durch die Vibration des optischen Sensors, sondern auch durch aufgrund der Fahrzeugbewegung auftretende Tiefenänderungen verursacht. Diese Fahrzeugbewegung ist nun aber bereits dadurch kompensiert, dass durch die Transformation des ersten aufgenommenen Bildes 10 von der Bildebene des optischen Sensors in die Fahrbahnebene das erste transformierte Bild 14 erzeugt wurde, aus dem ersten transformierten Bild 14 unter Berücksichtigung der Fahrzeugbewegung in der Zeitspanne zwischen dem ersten Zeitpunkt T-1 und dem zweiten Zeitpunkt T das weitere transformierte Bild 16 erzeugt wurde und das weitere transformierte Bild 16 aus der Fahrbahnebene in die Bildebene rücktransformiert wurde. Wie bereits erwähnt, erfolgt erfindungsgemäß die Bildstabilisierung dann auf der Basis des in die Bildebene rücktransformierten Bildes 18 und des zweiten aufgenommenen Bildes 12.

### Bezugszeichenliste

- 10: erstes aufgenommenes Bild
- 12: zweites aufgenommenes Bild
- 14: erstes transformiertes Bild
- 16: weiteres transformiertes Bild
- 18: rücktransformiertes Bild
- 20: transformiertes Bild

## Patentansprüche

1. Verfahren zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, bei dem
mittels des optischen Sensors zu einem ersten Zeitpunkt (T-1) ein erstes Bild (10) und zu einem späteren zweiten Zeitpunkt (T) ein zweites Bild (12) aufgenommen werden,
durch eine Transformation des ersten aufgenommenen Bildes (10) aus der Bildebene des optischen Sensors in die Fahrbahnebene ein erstes transformiertes Bild (14) erzeugt wird,
aus dem ersten transformierten Bild (14) unter Berücksichtigung der Trägerbewegung in der Zeitspanne zwischen dem ersten Zeitpunkt (T-1) und dem zweiten Zeitpunkt (T) ein weiteres transformiertes Bild (16) erzeugt wird,
das weitere transformierte Bild (16) aus der Fahrbahnebene in die Bildebene rücktransformiert wird und
auf der Basis des in die Bildebene rücktransformierten Bildes (18) und des zweiten aufgenommenen Bildes (12) eine Bildstabilisierung durchgeführt wird.

2. Verfahren nach Anspruch 1,
**dadurch gekennzeichnet,**
**dass** das erste transformierte Bild (14) zur Erzeugung des weiteren transformierten Bildes (16) unter Berücksichtigung der Trägerbewegung, insbesondere Trägergeschwindigkeit und/oder Trägergiergeschwindigkeit, in den späteren zweiten Zeitpunkt (T) transformiert wird.

3. Verfahren nach Anspruch 1 oder 2,
**dadurch gekennzeichnet,**
**dass** die Trägerbewegung, insbesondere Trägergeschwindigkeit und/oder Trägergiergeschwindigkeit, bei der Erzeugung des weiteren transformierten Bildes (16) durch eine entsprechende Translation und/oder Rotation des ersten transformierten Bildes (14) berücksichtigt wird.

4. Verfahren nach einem der vorhergehenden Ansprüche,
**dadurch gekennzeichnet,**
**dass** mit der Bildstabilisierung insbesondere durch eventuelle Fahrbahnunebenheiten, eine Trägerneigung, Trägervibrationen und/oder dergleichen bedingte Störungen kompensiert werden.

5. Verfahren nach einem der vorhergehenden Ansprüche,
**dadurch gekennzeichnet,**
**dass** bei der Bildstabilisierung aus dem rücktransformierten Bild (18) und dem zweiten aufgenommenen Bild (12) jeweils ein Kantenbild erzeugt wird.

6. Verfahren nach Anspruch 5,
**dadurch gekennzeichnet,**
**dass** aus den für das rücktransformierte Bild (18) und das zweite aufgenommene Bild (12) erhaltenen Kantenbildern ein Bewegungsvektor berechnet und dieser Bewegungsvektor zur Störungskompensation mit herangezogen wird.

7. Verfahren nach Anspruch 6,
**dadurchgekennzeichnet,**
**dass** der Bewegungsvektor durch eine Kalmann-Filterung korrigiert und der entsprechend korrigierte Bewegungsvektor zur Störungskompensation mit herangezogen wird.

8. Verfahren nach einem der vorhergehenden Ansprüche,
**dadurch gekennzeichnet,**
**dass** als optischer Sensor eine Kamera, insbesondere Videokamera, verwendet wird.

9. Verfahren nach Anspruch 8,
**dadurch gekennzeichnet,**
**dass** als optischer Sensor eine Monokamera verwendet wird.

10. Computerprogramm mit Programmcodemitteln zur Durchführung des Verfahrens nach einem der Ansprüche 1 bis 9, wenn das Computerprogramm auf einem Computer oder einer entsprechenden Recheneinheit ausgeführt wird.

11. Computerprogrammprodukt mit Programmcodemitteln, die auf einem computerlesbaren Datenträger gespeichert sind, zur Durchführung des Verfahrens nach einem der Ansprüche 1 bis 9, wenn das Computerprogramm auf einem Computer oder einer entsprechenden Recheneinheit ausgeführt wird.

12. Vorrichtung zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, mit einer Datenverarbeitungseinrichtung, die zur Durchführung des Verfahrens nach einem der Ansprüche 1 bis 9 ausgebildet ist.

## Geänderte Patentansprüche

### Geänderte Patentansprüche gemäss Regel 137(2) EPÜ.

1. Verfahren zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, bei dem mittels des optischen Sensors zu einem ersten Zeitpunkt (T-1) ein erstes Bild (10) und zu einem späteren zweiten Zeitpunkt (T) ein zweites Bild (12) aufgenommen werden,
durch eine Transformation des ersten aufgenommenen Bildes (10) aus der Bildebene des optischen Sensors in die Fahrbahnebene ein erstes transformiertes Bild (14) erzeugt wird,
aus dem ersten transformierten Bild (14) unter Berücksichtigung der Trägerbewegung in der Zeitspanne zwischen dem ersten Zeitpunkt (T-1) und dem zweiten Zeitpunkt (T) ein weiteres transformiertes Bild (16) erzeugt wird,
**dadurch gekennzeichnet,**
**dass** zur Erzeugung des weiteren transformierten Bildes (16) das erste transformierte Bild (14) unter Berücksichtigung der Trägerbewegung in den späteren zweiten Zeitpunkt (T) transformiert wird und aus dem ersten transformierten Bild (14) und dem aus der Transformation in den späteren zweiten Zeitpunkt (T) erhaltenen transformierten Bild (20) durch eine Hintergrundsubtraktion in der Fahrbahnebene ein Differenzbild erzeugt wird,
das durch das Differenzbild gebildete weitere transformierte Bild (16) aus der Fahrbahnebene in die Bildebene rücktransformiert wird und
auf der Basis des in die Bildebene rücktransformierten Bildes (18) und des zweiten aufgenommenen Bildes (12) eine Bildstabilisierung durchgeführt wird,
wobei mit der Bildstabilisierung insbesondere durch eventuelle Fahrbahnunebenheiten, eine Trägerneigung, Trägervibrationen und/oder dergleichen bedingte Störungen kompensiert werden, bei der Bildstabilisierung aus dem rücktransformierten Bild (18) und dem zweiten aufgenommenen Bild (12) jeweils ein Kantenbild erzeugt wird, aus den für das rücktransformierte Bild (18) und das zweite aufgenommene Bild (12) erhaltenen Kantenbildern ein Bewegungsvektor berechnet und dieser Bewegungsvektor zur Störungskompensation mit herangezogen wird.

2. Verfahren nach Anspruch 1,
**dadurch gekennzeichnet,**
**dass** das erste transformierte Bild (14) zur Erzeugung des weiteren transformierten Bildes (16) unter Berücksichtigung der Trägergeschwindigkeit und/oder Trägergiergeschwindigkeit in den späteren zweiten Zeitpunkt (T) transformiert wird.

3. Verfahren nach Anspruch 1 oder 2,
**dadurch gekennzeichnet,**
**dass** die Trägerbewegung, insbesondere Trägergeschwindigkeit und/oder Trägergiergeschwindigkeit, bei der Erzeugung des weiteren transformierten Bildes (16) durch eine entsprechende Translation und/oder Rotation des ersten transformierten Bildes (14) berücksichtigt wird.

4. Verfahren nach einem der vorhergehenden Ansprüche,
**dadurch gekennzeichnet,**
**dass** der Bewegungsvektor durch eine Kalmann-Filterung korrigiert und der entsprechend korrigierte Bewegungsvektor zur Störungskompensation mit herangezogen wird.

5. Verfahren nach einem der vorhergehenden Ansprüche,
**dadurch gekennzeichnet,**
**dass** als optischer Sensor eine Kamera, insbesondere Videokamera, verwendet wird.

6. Verfahren nach Anspruch 5,
**dadurch gekennzeichnet,**
**dass** als optischer Sensor eine Monokamera verwendet wird.

7. Computerprogramm mit Programmcodemitteln zur Durchführung des Verfahrens nach einem der Ansprüche 1 bis 6, wenn das Computerprogramm auf einem Computer oder einer entsprechenden Recheneinheit ausgeführt wird.

8. Computerprogrammprodukt mit Programmcodemitteln, die auf einem computerlesbaren Datenträger gespeichert sind, zur Durchführung des Verfahrens nach einem der Ansprüche 1 bis 6, wenn das Computerprogramm auf einem Computer oder einer entsprechenden Recheneinheit ausgeführt wird.

9. Vorrichtung zur Detektion eines auf einer Fahrbahn befindlichen Hindernisses, insbesondere Fußgängers, in der Umgebung im Sichtbereich eines an einem beweglichen Träger wie insbesondere einem Fahrzeug angebrachten optischen Sensors, mit einer Datenverarbeitungseinrichtung, die zur Durchführung des Verfahrens nach einem der Ansprüche 1 bis 6 ausgebildet ist.
